Europäisches Patentamt

European Patent Office

Office européen des brevets

(11) Veröffentlichungsnummer: **0 139 935**
A2

(12) **EUROPÄISCHE PATENTANMELDUNG**

(21) Anmeldenummer: 84109499.8

(22) Anmeldetag: 09.08.84

(51) Int. Cl.⁴: **B 62 D 33/04**

(30) Priorität: 24.08.83 DE 3330458

(43) Veröffentlichungstag der Anmeldung:
08.05.85 Patentblatt 85/19

(84) Benannte Vertragsstaaten:
AT BE CH DE FR GB IT LI LU NL SE

(71) Anmelder: The Coca-Cola Company
310 North Avenue
Atlanta Georgia 30313(US)

(72) Erfinder: Kramer, Thomas
Thielenstrasse 26
D-4150 Krefeld(DE)

(74) Vertreter: Selting, Günther, Dipl.-Ing. et al,
Deichmannhaus am Hauptbahnhof
D-5000 Köln 1(DE)

(54) Verschlussvorrichtung für Lastwagen.

(57) Zum Verschließen der Öffnung (15) des Laderaumes (14) eines Lastwagens ist das eine Ende einer Plane (20) über der Öffnung (15) befestigt. Das andere Ende trägt eine Einhakvorrichtung (24), die am unteren Ende der Öffnung (15) festgehakt werden kann. Die Plane (20) weist Löcher (25) auf, durch die Zugelemente (18) hindurchgefädelt sind. Die Zugelemente (18) sind auf Spannrollen (17) aufgewickelt, die die Plane (20) zu einem Paket zusammenziehen. Zum Verschließen der Öffnung (15) wird die Einhakvorrichtung (24) an dem unteren Ende der Öffnung (15) festgehakt. Das Spannen der Plane (20) erfolgt dann durch Aufblasen eines Kissens (23), über das die Plane (20) geführt ist.

FIG.4

Verschlußvorrichtung für Lastwagen
-------------------------------------

Die Erfindung betrifft eine Verschlußvorrichtung für Lastwagen, zum Verschließen einer Öffnung des Laderaumes, mit einer an einem oberen Trägerelement befestigten Plane, die vertikale Lochreihen aufweist, durch deren Löcher Zugelemente hindurchgefädelt sind.

Es ist bekannt, bei Lastwagen die Ladeöffnung mit einer Plane zu verschließen. Auch existieren bereits Lösungen, die es ermöglichen, die Plane als Ladungssicherung einzusetzen, indem sie durch Gurte in horizontaler oder vertikaler Richtung verstärkt wird und über geeignete Vorrichtungen jeweils in der Richtung des Verlaufs der Verstärkungsgurte gespannt wird. Die existierenden Spannvorrichtungen sind meist sehr umständlich bzw. aufwendig zu betätigen, und auch das Öffnen bzw. Schließen dieser Planen ist aufwendig, weil sie als Schleuderplanen ausgeführt sind und deshalb in horizontaler Richtung geöffnet werden müssen. Derartige Planen

- 2 -

geben auch in geöffnetem Zustand nicht die volle Ladefläche frei, sondern müssen von Fall zu Fall zusätzlich noch verschoben werden.

Der Erfindung liegt die Aufgabe zugrunde, eine Verschlußeinrichtung der eingangs genannten Art zu schaffen, die
es ermöglicht, die Plane auf einfache Weise von der
Öffnung zu entfernen und die andererseits auch ein einfaches und problemloses Verschließen der Öffnung möglich macht.

Zur Lösung dieser Aufgabe ist erfindungsgemäß vorgesehen,
daß die oberen Enden der Zugelemente an Spannrollen befestigt sind, die zum Aufrollen der Zugelemente vorgespannt sind und daß die unteren Enden der Zugelemente
mit dem unteren Ende der Plane fest verbunden sind,
derart, daß beim Aufrollen der Zugelemente auf die
Spannrollen die Plane zieharmonikaartig zusammengefaltet und gegen einen Anschlag gezogen wird.

Hierbei sind die Funktionen "Öffnen" und "Schließen"-
bzw. "Spannen", obwohl sie die gleiche Wirkrichtung
haben, mechanisch voneinander getrennt. Dies wird dadurch bewirkt, daß die Plane an einem oberen Trägerelement des Fahrzeuges bzw. der Ladefläche fest eingespannt ist und andererseits durch vertikal verlaufende Ösenreihen in der Plane geeignete Zugelemente in
vertikaler Richtung schlangenlinienartig hindurchgeführt sind. Diese Zugelemente sind einerseits am
unteren Ende der Plane befestigt, und andererseits
im oberen Bereich des Fahrzeuges bzw. der Ladefläche auf eine Drehwelle geführt, die es ermöglicht, die Zugelemente synchron auf- bzw. abzurollen. Die Führung der Zugelemente, in Verbindung mit horizontal verlaufenden Verstärkungselementen in der Plane, z.B. in Form von eingenähten Stäben, macht es möglich, die Plane definiert zieharmonikaartig nach oben gegen einen Anschlag zusammenzufalten.

Bei der erfindungsgemäßen Verschlußvorrichtung werden zum Verschließen der Öffnung die Zugelemente von den Spannrollen abgezogen, so daß die Plane, die zuvor ein zieharmonikaartiges Paket gebildet hat, entfaltet und vor der Öffnung aufgespannt wird. Das untere Ende der Plane kann am unteren Ende der Öffnung eingehakt werden, so daß das Verschließen der Öffnung auf einfache Weise durchgeführt werden kann, indem lediglich am unteren Ende der Plane gezogen wird. Soll die Öffnung freigelegt werden, dann wird das untere Ende der Plane von der Verhakung gelöst und die Plane wird durch Aufrollen der Zugelemente auf die Spannrollen zunehmend zusammengefaltet. Hierbei bildet die Plane ein zieharmonikaartiges Paket, das sich gegen den am oberen Ende der Öffnung vorgesehenen Anschlag legt.

Die Plane braucht also nicht aufgerollt oder auf das Fahrzeugdach übergeschlagen zu werden, sondern die gespannten Zugelemente bewirken eine definierte Faltung.

- 4 -

Die Öffnung der Ladefläche wird also selbsttätig freigegeben und die Plane wird aus dem Bereich der Öffnung entfernt, um ein definiertes Paket zu bilden,
das den Zugang zur Öffnung in keiner Weise behindert.

Vorzugsweise ist zwischen zwei Löchern einer Lochreihe
jeweils ein horizontales Verstärkungselement an der
Plane befestigt. Diese Verstärkungselemente erleichtern
das definierte Zusammenfalten der Plane zu einem Paket
und sie dienen gleichzeitig der Ladungssicherung, da
sie die Plane in Querrichtung verstärken. Die Verstärkungselemente können aus Stangen oder Stäben aus
Metall, Holz, Kunststoff o.dgl. bestehen.

Die Spannrollen können auf einer gemeinsamen Welle befestigt sein, die von mindestens einer Drehfeder vorgespannt ist. Hierdurch ist sichergestellt, daß alle
Zugelemente einer Plane synchron und mit gleicher Kraft
vorgespannt sind, so daß ein gleichmäßiges Hochziehen
der Plane über deren gesamte Breite erfolgt.

Gemäß einer bevorzugten Ausführungsform der Erfindung
ist vorgesehen, daß am unteren Ende der Plane eine Einhakvorrichtung zum Verhaken am unteren Rand der Öffnung

vorgesehen ist und daß die an einem Ende fest eingespannte Plane über ein aufblasbares Kissen umgelenkt
ist. Die Plane hat hierbei eine solche Länge, daß bei
ungespanntem Kissen die Einhakvorrichtung am unteren
Ende der Öffnung befestigt werden kann, wenn die Plane
vollständig entfaltet ist. Wenn anschließend das Kissen
aufgeblasen wird, wird die Plane straff gespannt. Ein
wesentlicher Vorteil dieser Maßnahme besteht darin,
daß es auf einfache Weise möglich ist, die Plane zu
straffen, indem lediglich das Kissen aufgeblasen wird.
Während das Verhaken am unteren Ende der Plane durchgeführt wird, erfolgt das Spannen am oberen Ende. Dieses
Prinzip der mechanischen Trennung der Funktionen
"Schließen" und "Spannen" ist wichtig, da die am unteren
Ende der Öffnung vorzusehenden Befestigungsmittel keine
Spannvorrichtungen aufweisen müssen, sondern lediglich
Verhakungselemente. Das Kissen kann an die fahrzeugeigene Druckluftanlage, die auch zum Betätigen der Bremsen benutzt wird, angeschlossen sein, wobei die Steuerung
der Luftzufuhr in das Kissen und des Luftablasses aus
dem Kissen durch ein manuell zu betätigendes Ventil
erfolgt.

Das Kissen kann auch unterhalb der Öffnung angeordnet
werden, so daß das Spannen der Plane von unten her erfolgt, während das obere Ende fest eingespannt ist.
Vorzugsweise ist das Kissen jedoch an dem oberen Trägerelement in der Nähe der Einspannstelle der Plane befestigt.

Gemäß einer bevorzugten Ausführungsform der Erfindung ist vorgesehen, daß die Ladefläche Bestandteil eines auswechselbaren Lastträgers ist, an dem die Einhakvorrichtung verankerbar ist, und daß das Trägerelement, die Spannrollen und das aufblasbare Kissen an einer den Lastträger übergreifenden Brücke des Lastwagens angebracht sind. Hierbei handelt es sich um eine Art Container-Fahrzeug, bei dem der Lastträger jedoch kein üblicher Container mit geschlossenen Seitenwänden ist, sondern offene Seitenwände aufweist. An der Brücke des Lastwagens sind die Plane und deren Befestigungs- und Spannmittel befestigt. Das untere Ende der Plane wird an dem Lastträger eingehakt. Auf diese Weise kann mit der Plane, die Bestandteil des Lastwagens ist, der Lastträger seitlich bedeckt und verschlossen werden, wobei das untere Ende der Plane am Lastträger angreift.

Im folgenden werden unter Bezugnahme auf die Zeichnungen Ausführungsbeispiele der Erfindung näher erläutert.

Es zeigen:

Fig. 1    eine Ansicht der Verschlußvorrichtung an einem Lastwagen,

Fig. 2    einen Schnitt entlang der Linie II-II von Fig. 1 bei heruntergezogener Plane,

Fig. 3    eine Darstellung wie Fig. 2 beim Öffnen der Plane,

Fig. 4    eine Darstellung wie Fig. 2 bei vollständig geöffneter Plane,

Fig. 5 eine Seitenansicht eines Fahrzeugs mit auswechselbarem Lastträger und

Fig. 6 einen Teilschnitt entlang der Linie VI-VI von Fig. 5.

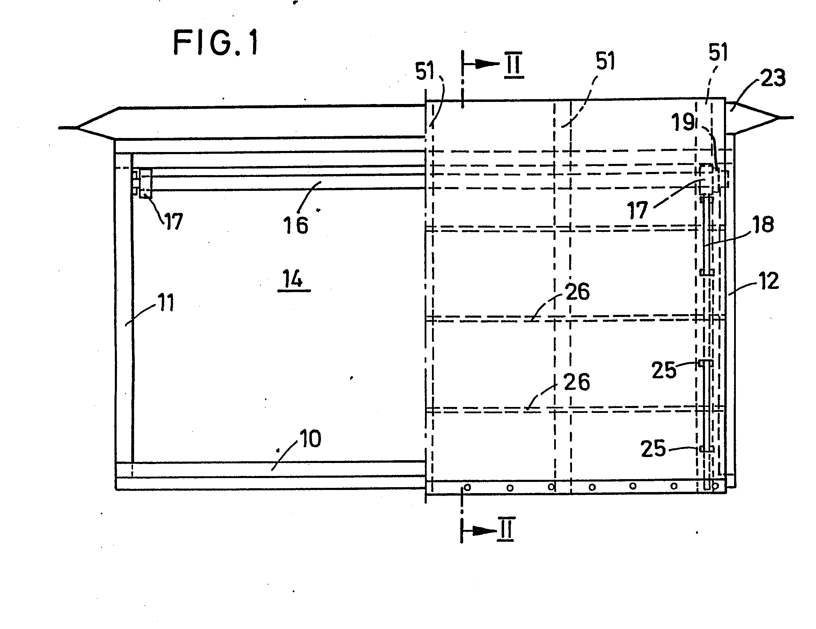

Fig. 1 zeigt eine Seitenansicht des Lastaufnahmeteils eines Lastwagens, dessen Ladefläche von einer Bodenwand 10 gebildet wird. Von der Bodenwand 10 erstreckt sich eine vertikale Vorderwand 11, die dem (nicht dargestellten) Führerhaus zugewandt ist, nach oben. Parallel zu der Vorderwand 11 verläuft eine geschlossene Rückwand 12 am rückwärtigen Fahrzeugende. Der Laderaum 14 wird an seiner Oberseite durch eine horizontale Deckenwand 13 begrenzt. Die Seiten des Laderaums 14 sind offen.

Unter der Deckenwand 13 erstreckt sich an jeder seitlichen Öffnung 15 des Laderaumes 14 eine horinzontale Welle 16, deren Enden in der Vorderwand 11 und in der Rückwand 12 gelagert sind. Die Welle 16 trägt Spannrollen 17, auf die Zugelemente 18 aufgewickelt werden können. Bei den Zugelementen 18 handelt es sich im vorliegenden Fall um Gurte, die spiralförmig auf die Spannrollen 17 aufgewickelt werden. Die Welle 16 ist durch eine ortsfest abgestützte Drehfeder 19 gespannt, so daß die Spannrollen 17 bestrebt sind, die Zugelemente 18 aufzuwickeln.

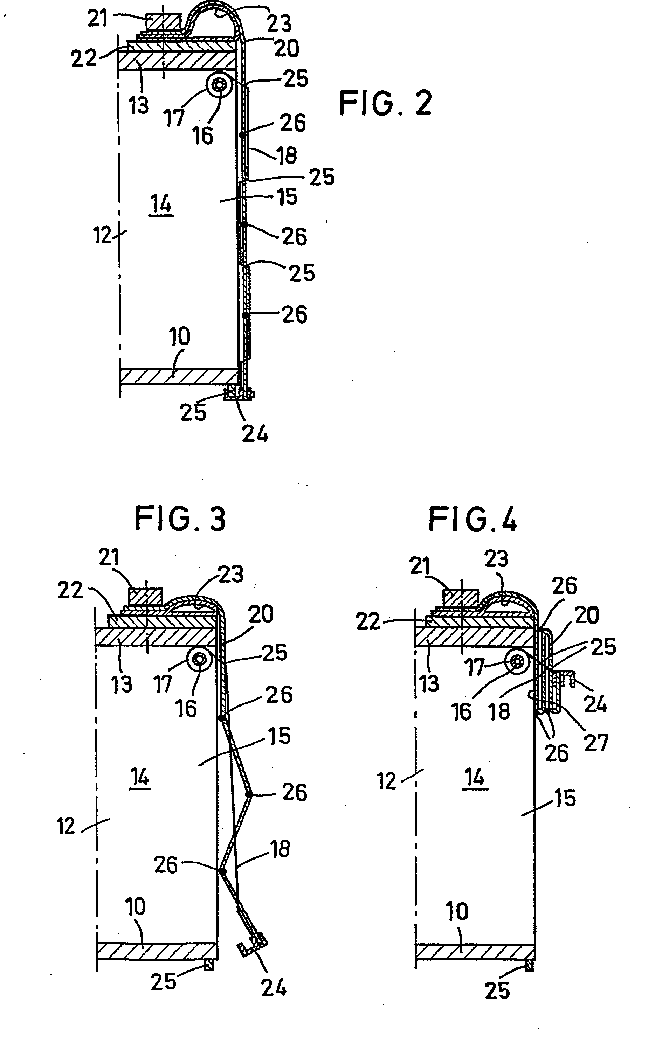

Die Plane 20 ist mit ihrem oberen Ende mit einer Befestigungsleiste 21 auf einem plattenförmigen Trägerelement 22 fixiert, welches auf der Deckenwand 13 befestigt ist. Die Befestigungsleiste 21 dient gleichzeitig zum Befestigen des Kissens 23 auf dem Trägerelement 22. Das Kissen 23 ist ein Schlauch, der sich über die gesamte Breite der Plane 20 erstreckt, und der über den seitlichen Rand der Deckenwand 13 angeordnet ist. Die Plane 20 verläuft über das Kissen 23 hinweg. Sie wird also zwischen der Befestigungsleiste 21 und der Öffnung 15 von dem Kissen 23 umgelenkt. In dem Zustand, der in Fig. 2 dargestellt ist, verläuft die Plane 20 senkrecht vor der Öffnung 15 nach unten. Am unteren Ende der Plane 20 befindet sich eine Einhakvorrichtung 24 mit einem Haken, der eine Leiste 25 untergreift. Die Leiste 25 ist an der Unterseite der Bodenwand 10 in der Nähe der Öffnung 15 angeordnet. Wenn das Kissen 23 entlastet (flachgelegt) ist, kann die Einhakvorrichtung 24 an der Leiste 25 festgehakt werden. Wird danach das Kissen 23 durch Einblasen von Luft gespannt, dann wird die Plane 20 über ihre gesamte Länge festgespannt, wobei das Kissen 23 bestrebt ist, die Plane nach oben zu drücken, während die Plane gleichzeitig von der Einhakvorrichtung 24 am unteren Ende festgehalten wird.

Jedes der Zugelemente 18 ist durch Löcher 25 einer Lochreihe der Plane 30 hindurchgefädelt. Wie aus den Fign. 1 (rechts) und 2 zu erkennen ist, verläuft ein Zugelement 18 in einem Bereich zwischen zwei Löchern 25 längs der Außenseite der Plane und in dem nächstfolgenden Bereich zwischen zwei Löchern 25 längs der Innenseite der Plane 20 usw.. In der Mitte eines Bereichs zwischen zwei Löchern 25 ist die Plane 20 durch ein Verstärkungselement 26 verstärkt. Bei diesen Verstärkungselementen 26 halndelt es sich um Stäbe, die in die Plane eingenäht oder auf andere Weise an der Plane befestigt sind. Diese Verstärkungselemente verlaufen parallel zur Einhakvorrichtung 24 bzw. zur Welle 16.

Wenn der Verschlußzustand, der in Fig. 2 dargestellt ist, beendet werden soll, wird das Kissen 23 durch Herauslassen der in ihm enthaltenen Luft entspannt. Nun ist die Plane 20 nicht mehr gespannt, so daß die Einhakvorrichtung 24 von der Leiste 25 gelöst werden kann. Wenn dies geschieht, werden die Zugelemente 18 von den Spannrollen 17 aufgerollt, wie dies in der Anfangsphase in Fig. 3 dargestellt ist. Man erkennt, daß die einzelnen Abschnitte zwischen den Verstärkungselementen 26 sich hierbei zieharmonikaartig falten, wobei diejenigen Verstärkungselemente 26, die sich von den Zugelementen 18 aus innen befinden, die inneren Knickstellen bilden, während diejenigen Verstärkungselemente 26, die sich von den Zugelementen 18 aus außen befinden, die äußeren Knickstellen bilden.

Fig. 4 zeigt die Konfiguration, die die Plane 20 einnimmt, wenn die Zugelemente 18 maximal auf die Spannrollen 17 aufgewickelt sind. Die Löcher 25, durch die die Zugelemente 18 hindurchgehen, liegen in dem gebildeten zieharmonikaartigen Paket der Plane 20 nahezu übereinander, so daß die Zugelemente 18 geradlinig durch die Löcher 25 hindurchgehen können. Den äußeren Abschluß des Pakets bildet die Einhakvorrichtung 24, an der die Enden der Zugelemente 18 befestigt sind. Die Zugelemente 18 verlaufen im Bereich der Öffnung 15 in jeder Phase im wesentlichen geradlinig, da sie unter der Spannung der Spannvorrichtung 19 stehen. Bei zusammengelegter Plane gemäß Fig. 4 befinden sich die Verstärkungselemente 26, die die Knickstellen der Plane 20 markieren, an den Außenseiten des Pakets. Das Paket legt sich von außen her gegen einen Anschlag 27 in der Nähe der Welle 16, so daß die Plane sich, wenn ihr unteres Ende freigegeben wird, stets in der in Fig. 4 dargestellten Weise zusammenfaltet und gegen das obere Ende des Randes der Öffnung 15 legt. Zum Verschließen der Öffnung 15 braucht lediglich die Einhakvorrichtung 24 nach unten gezogen und an der Leiste 25 verhakt zu werden. Durch anschließendes Einlassen von Luft in das Kissen 23 wird die Plane 20 zwischen der oberen Befestigungsleiste 21 und der unteren Einhakvorrichtung 24 straff gespannt, so daß sie nicht flattert und darüber hinaus auch in der Lage ist, die Ladung am Herausfallen aus der Öffnung 15 zu hindern.

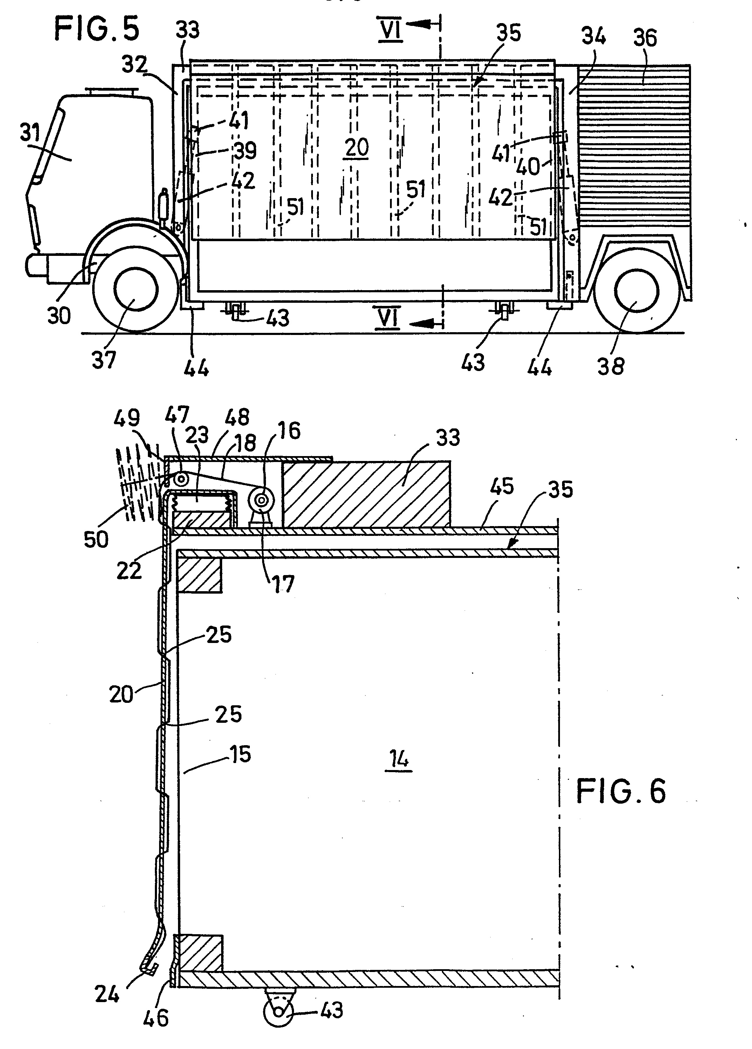

In den Fign. 5 und 6 ist ein Lastwagen dargestellt, der sich insbesondere für den Transport von Getränken eignet. Der Lastwagen weist einen Rahmen 30 auf, an dem das Führerhaus 31 befestigt ist. Hinter dem Führerhaus 31 schließt sich an den Rahmen 30 eine vertikale Stütze 32 an, die über horizontale Träger 33 mit der rückwärtigen vertikalen Stütze 34 verbunden ist. Die Stützen 32 und 34 bilden mit den Trägern 33 eine nach unten hin offene umgekehrt-U-förmige Rahmenstruktur, die den Lastträger 35 – in Seitenansicht des Lastwagens gesehen – auf seiner gesamten Länge übergreift. An der Rückseite der rückwärtigen vertikalen Stütze 34 ist der Motor 36 befestigt, der die Hinterräder antreibt. Sowohl die Vorderachse 37 als auch die Hinterachse 38 ist an dem Rahmen 30 über Feder- und Dämpfungsglieder aufgehängt.

Der Lastträger 35 hat ein rechteckiges Kastenprofil. Er ist nach den Seiten hin offen, während die übrigen vier Wände (Bodenwand, Deckenwand, Frontwand und Rückwand) geschlossen ausgebildet sind. An den Außenseiten der Frontwand 39 und der Rückwand 40 des Lastträgers 35 sind vorstehende Ansätze 41 vorgesehen, die jeweils von einem Element 42, das an dem Rahmen 30 abgestützt ist, untergriffen werden können. Die Hubelemente 42 sind Kolben-Zylinder-Einheiten, die gelenkig zwischen den beiden vorderen Stützen 32 und zwischen den beiden hinteren Stützen 34 angebracht sind. Die im wesentlichen vertikal verlaufenden Hubelemente 42 untergreifen die Ansätze 41 und heben den Lastträger 35, der mit Laufrollen 43 auf dem Boden stehen kann, vom Boden an. In der Fahrstellung, die in Fig. 5 dargestellt ist, greifen Verriegelungselemente 44 des Rahmens 30 an dem Lastträger 35 an, um diesen starr mit dem in sich starren Rahmen 10 zu verbinden.

Wie Fig. 6 zeigt, ist die Welle 16 mit den Spannrollen 17 auf der Oberwand 45 gelagert, die unter den Trägern 33 befestigt ist. Auf der Oberwand 45 ist außerdem ein leistenförmiges Trägerelement 22 befestigt, auf dem das aufblasbare Kissen 23 angeordnet ist. Die Plane 20 ist an der nach innen weisenden Seite des Trägerelementes 22 befestigt, läuft über das Kissen 23 hinweg und erstreckt sich längs der seitlichen Öffnung 15 des Lastträgers 35 nach unten. An dem unteren Ende der Plane 20 befindet sich die Einhakvorrichtung 24, die unter eine nach außen vorstehende Lasche 46 am unteren Ende der Öffnung 15 des Lastträgers 35 eingesetzt und an dieser Lasche 46 verhakt werden kann. Die Zugelemente 18 sind, ebenso wie bei dem ersten Ausführungsbeispiel, durch Löcher 25 der Plane 20 hindurchgefädelt. Oberhalb des Kissens 23 befinden sich Umlenkwalzen 47, über die die Zugelemente 18 mit vertikalem Abstand über das Kissen 23 zu den Spannrollen 17 geführt werden. Über den Umlenkrollen 47 erstreckt sich ein Verkleidungsblech 48, das auf dem jeweiligen Träger 33 befestigt ist, und das an seiner Außenseite einen nach unten umgebogenen Schenkel 49 aufweist, der einen Anschlag zum Anlegen des von der zusammengerafften Bahn 20 gebildeten Pakets 50 bildet. Die Plane 20 läuft durch einen Schlitz unterhalb des Schenkels 49 hindurch. Wie aus Fig. 6 zu erkennen ist, befindet sich das Paket 50 der zusammengerafften Plane 20 oberhalb des Lastträgers 35, so daß das Auswechseln des Lastträgers 35 nicht behindert wird. Die Plane ist zusammen mit den Zugelementen 18 und allen anderen Elementen der Verschlußvorrichtung - mit Ausnahme der Lasche 46 - Bestandteil des Fahrzeugs, während die Lasche 46 an dem auswechselbaren Lastträger 35, dessen Öffnung 15 verschlossen werden soll, befestigt ist.

Zum Zusammenfalten der Plane 20 in der Nähe des oberen Endes der Öffnung 15 können auch mehr als zwei Zugelemente 18 verwendet werden. Beispielsweise können eines oder mehrere Zugelemente im Bereich der Mitte der Öffnung 15 vorgesehen sein. Wichtig ist, daß die Zugelemente 18 nach Art eines Schnapprollos aufgewickelt werden und dabei die Plane 20 in der dargestellten Weise zusammenfalten, so daß das Paket 50 entsteht, in welchem sich sämtliche Zugelemente 18 wenigstens annähernd geradlinig durch die übereinanderliegenden Löcher 25 einer jeden Lochreihe hindurcherstrecken. Zum Spannen der Plane 20 wird unabhängig von den Zugelementen 18 von dem Kissen 23 ein Zug auf die Plane 20 ausgeübt, um diese gestrafft zu halten.

Aus den Fign. 1 und 5 ist ersichtlich, daß auf der Innenseite der Plane 20 Verstärkungsgurte 51 befestigt, z.B. aufgenäht,sind. Diese vertikalen Verstärkungsgurte 51, die an der Einhakvorrichtung 24 befestigt sind, und die beim Aufblasen des Kissens 23 straff gespannt werden, dienen insbesondere der Lagesicherung des im Laderaum 14 befindlichen Transportgutes, indem sie das Herausfallen aus dem Laderaum 14 verhindern.

- 14 -

ANSPRÜCHE

1. Verschlußvorrichtung für Lastwagen, zum Verschließen
   einer Öffnung (15) des Laderaumes (14), mit einer an
   einem oberen Trägerelement (22) befestigten Plane (20),
   die vertikale Lochreihen aufweist, durch deren Löcher
   (25) Zugelemente (18) hindurchgefädelt sind, d a -
   d u r c h   g e k e n n z e i c h n e t , daß die
   oberen Enden der Zugelemente (18) an Spannrollen (17)
   befestigt sind, die zum Aufrollen der Zugelemente (18)
   vorgespannt sind und daß die unteren Enden der Zugelemente (18) mit dem unteren Ende der Plane (20) fest
   verbunden sind, derart, daß beim Aufrollen der Zugelemente (18) auf die Spannrollen (17) die Plane (20)
   zieharmonikaartig zusammengefaltet und gegen einen
   Anschlag (27,49) gezogen wird.

2. Verschlußvorrichtung nach Anspruch 1, dadurch gekennzeichnet, daß zwischen zwei Löchern (25) einer Lochreihe jeweils ein horizontales Verstärkungselement
   (26) an der Plane (20) befestigt ist.

3. Verschlußvorrichtung nach Anspruch 1 oder 2, dadurch
   gekennzeichnet, daß die Spannrollen (17) auf einer gemeinsamen Welle (16) befestigt sind, die von mindestens
   einer Drehfeder (19) vorgespannt ist.

4. Verschlußvorrichtung nach einem der Ansprüche 1 bis 3, dadurch gekennzeichnet, daß am unteren Ende der Plane (20) eine Einhakvorrichtung (24) zum Verhaken am unteren Rand der Öffnung (15) vorgesehen ist, und daß die an einem Ende fest eingespannte Plane (20) über ein aufblasbares Kissen (23) umgelenkt ist.

5. Verschlußvorrichtung nach Anspruch 4, dadurch gekennzeichnet, daß der Laderaum (14) Bestandteil eines auswechselbaren Lastträgers (35) ist, an dem die Einhakvorrichtung (24) verankerbar ist, und daß das Trägerelement (22), die Spannrollen (17) und das aufblasbare Kissen (23) an einer den Lastträger (35) übergreifenden Brücke (32,33,34) des Lastwagens angebracht sind.

FIG.1

-1/3-

FIG. 2

FIG. 3

FIG. 4

FIG.5

FIG.6